(19) Europäisches Patentamt
European Patent Office
Office européen des brevets

(11) **EP 4 770 074 A1**

(12) **EUROPEAN PATENT APPLICATION**

(43) Date of publication:
**01.07.2026  Bulletin 2026/27**

(21) Application number: **24223730.3**

(22) Date of filing: **30.12.2024**

(51) International Patent Classification (IPC):
**H04N 5/04** *(2006.01)*

(52) Cooperative Patent Classification (CPC):
**H04N 5/04; G09G 5/12;** G09G 2340/0435

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **von Braun, Max**
**22926 Ahrensburg (DE)**

(72) Inventor: **von Braun, Max**
**22926 Ahrensburg (DE)**

(74) Representative: **Reitstötter Kinzebach**
**Patentanwälte**
**Sternwartstraße 4**
**81679 München (DE)**

(54) **METHOD FOR WIRELESSLY SYNCHRONIZING AN IMAGE DISPLAYING DEVICE AND AN IMAGE RECORDING DEVICE**

(57)   The present invention concerns a method and devices for wirelessly synchronizing at least one image displaying device and at least one image recording device, said method comprising the steps of:
a) displaying a sequence of display image frames at a displaying frame rate (DFR) with said image displaying device;
b) recording a sequence of recording image frames of scenery including said sequence of display image frames with said image recording device at a recording frame rate (RFR);
c) synchronizing said displaying frame rate (DFR) and said recording frame rate (RFR) such that said recording frame rate (RFR) is an integer multiple or an integer fraction of said displaying frame rate; and
d) adjusting a phase shift between said sequence of displaying image frames and said sequence of recording image frames such that each recording image frame captures a portion of a single displaying image frame.

Fig. 3

EP 4 770 074 A1

**Description**

The present invention concerns a method for wirelessly synchronizing an image displaying device and an image recording device, preferably at least one image displaying device and at least one image recording device, for instance synchronizing LED projectors or LED panels with cameras such as video cameras or mobile phone cameras.

In video production, a scenery is usually captured with a camera operating at a recording frame rate RFR to provide a video of a scenery which will be played at a video frame rate VFR. The frame rate is usually indicated as "frames per second" (fps) or as a recording frequency indicated in Hertz (Hz). For instance, in the US, a typical standard video frame rate for broadcasting digital videos is usually 60 fps, corresponding to a frequency of 60 Hz. In this example, one second of video stream comprises 60 images, also denoted as image frames or just frames. Consequently, the available time interval for each frame, denoted frame time interval in the context of the present invention, is the inverse of the corresponding frame rate, i.e. 1/RFR or 1/VFR. In the example of a frame rate of 60 fps (60 Hz), the corresponding time interval is 16.7 ms. Typical video frame rates include 12 fps, 24 fps, 25 fps, 30 fps, 50 fps, 60 fps, etc.

In a typical video production, the video frame rate VFR for playback of the recorded video corresponds to the recording frame rate RFR used for capturing a sequence of camera images of a scenery. In this case, any movement in the scenery is reproduced realistically in the final video stream. However, it is also possible to record a scenery with a recording frame rate which is higher than the video frame rate at which the recorded video is played back which results in a slow-motion effect in the final video. For instance, if a sequence of camera images is captured at a recording frame rate RFR of 100 fps but the resulting video is played back at a video frame rate of 50 fps, the resulting video is slowed down by a slow-motion factor *sf* of 2. Conversely, if the scenery is captured with a recording frame rate RFR which is lower than the video frame rate VFR, the resulting video will be a time-lapse video.

When recording a video, the exposure of the individual camera frames is determined by the ISO setting of the camera sensor, by the aperture of the camera lens and by the so-called "shutter speed", i.e. the time duration during which electromagnetic radiation is accumulated by the camera sensor for each camera frame, i.e. for each picture produced by the camera. Accordingly, the maximum shutter time (exposure time) for each camera frame (camera image) corresponds to the recording frame time interval 1/RFR. For certain applications, it is possible to reduce the shutter time, i.e. the exposure time per frame, to values lower than the maximum shutter time 1/RFR, for instance in order to compensate for a bright environment or to capture specific features of a scenery which are only shown for very short time intervals, as will be described in more detail below. In the context of the present invention, a shutter time (exposure time) which corresponds to the maximum value 1/RFR is denoted "unshuttered", while camera frames (camera images) produced with a shutter time (exposure time) lower than the maximum value 1/RFR are denoted "shuttered".

Rather than using the term "shutter speed", it is also common to use the term "shutter angle" which originates from the world of analogue film cameras and refers to the portion of the mechanical rotary shutter that is open during the exposure of each frame. When applied to modern digital imaging sensors, the term is used rather metaphorically to describe the relationship between exposure time and frame rate, particularly when using digital video cameras. In analogue film cameras, the shutter is a rotating disk with a cutout section, the angle of which determines the exposure. When the disk is rotating, the "shutter angle" refers to the angle of the open segment of the disk. For example, if the shutter angle is 180°, the exposure time for each frame is half of the time interval between frames, i.e. 50 percent of the time duration of each frame time interval, the shutter is open. In digital cameras, where there is no physical rotary shutter, the concept is used to express exposure time relative to frame rate. Instead of an actually rotating disk, the exposure time, i.e. the time period during which the sensor collects light, is referred to using shutter angle terminology. Accordingly, the exposure time can be calculated from the shutter angle and the frame interval as follows:

$$\text{Exposure time/shutter speed} = (\text{shutter angle})/360° \times (\text{frame time interval}),$$

wherein the frame interval is the time between the start of one frame and the start of the next frame which is the inverse of the frame rate, e.g. for a frame rate of 24 frames per second, the frame interval is 41.67 ms and the shutter angle is a number between 0° (no exposure) and 360° (maximum possible exposure for each frame). In summary, larger shutter angles result in longer exposure times which capture more motion blur and overall light. This is often used for creating a smooth cinematic feel. Smaller shutter angles (closer to 0°) result in shorter exposure times, reducing motion blur and producing sharper images which is often used in action scenes or fast-paced video streams. In digital video production, adjusting the shutter angle affects both motion blur and light sensitivity. A larger shutter angle allows more light to hit the sensor but increases motion blur, while a smaller shutter angle reduces both. In essence, selecting an appropriate shutter angle in digital imaging allows film makers and videographers to fine-tune the visual characteristics of motion and light.

There are various application in which one or more image recording devices, such as cameras, record a scenery in which, as part of the scenery, image displaying devices, such as LED panels or LED projectors, are included which display a sequence of display image frames, for instance the image frames of a video shown on the LED panel or projected by the LED projector. Typical examples include advertisements shown on LED panels at sports events or entertainment events, background image content shown on a large array of LED panels or projected by one or more LED projectors, etc. It is also known that the sequence of display image frames shown on such image displaying devices can include main image content intended for direct viewers watching the image displaying device directly and "hidden" image content which is typically shown only for a fraction of a total frame time interval and is therefore not intended to be viewed by direct viewers but only to be recorded by appropriately synchronized image recording devices. Synchronization is typically carried out by establishing a wire-based connection between the image displaying devices and the image recording devices to a so-called master clock.

However, when a multiplicity of mobile image recording devices is involved, a wire-based connection to a master clock is no longer feasible. For instance, considering a sports event where a large audience with mobile phones is present at the event and records a scenery including image displaying devices, such as LED panels, and it is intended to show targeted advertisement during the recording, for instance in the native language of the user of the mobile device. Then, the technical problem arises of synchronizing the image recording devices of the individual users with the dedicated image content shown on the image displaying devices.

Therefore, the technical problem underlying the present invention resides in providing a method for wirelessly synchronizing at least one image displaying device and at least one image recording device. It is also a technical problem of the present invention to provide an image displaying device and/or an image recording device implementing the method of the present invention.

This technical problem is solved by the method of claim 1. Preferred embodiments of the method of the present invention are subject to the dependent claims.

Accordingly, the present invention concerns a method for wirelessly synchronizing at least one image displaying device and at least one image recording device, comprising the steps of:

a) displaying a sequence of display image frames at a displaying frame rate (DFR) with said image displaying device;
b) recording a sequence of recording image frames of scenery including said sequence of display image frames with said image recording device at a recording frame rate (RFR);
c) synchronizing said displaying frame rate (DFR) and said recording frame rate (RFR) such that said recording frame rate (RFR) is an integer multiple or an integer fraction of said displaying frame rate; and
d) adjusting a phase shift between said sequence of displaying image frames and said sequence of recording image frames such that each recording image frame captures a portion of a single displaying image frame.

In the method of the present invention, the image displaying device can be any electronic device which is capable of displaying a sequence of electronically generated display image frames. In the context of the present invention, "displaying" comprises planar displays made out of an array of light emitting elements, such as LED or OLED elements, but also projector-type devices which include an optic for projecting active elements within the image displaying device onto a passive surface, such as a screen. Typical projector-type devices include LED projectors or laser projectors. Typical panel-type devices include LED panels or OLED panels.

According to step a), the at least one image displaying device displays a sequence of display image frames at a displaying frame rate DFR. For instance, if a conventional video is shown on the image displaying device, a displaying frame rate DFR = 60 fps can be chosen, i.e. each display image frame is shown for a time period of 16.7 ms. It is also possible that the sequence of display image frames contains a first image content, for instance a first video intended to be captured by a first sub-group of image recording devices and a second image content, for instance a second video, intended to be captured by a second sub-group of image recording devices. For the first image content, the corresponding sequence of display image frames constitutes a first set of image data and for the second image content, the corresponding sequence of display image frames constitutes a second set of image data. As a matter of course, the sequence of display image frames can comprise more than two sets of different image data. Typically, these at least two sets of different image data are displayed in a time-sliced multiplexed manner with the image displaying device as for instance described in patent application US 2009/102957 A1 (Phelan). In addition, the sequence of display image frames can comprise image frames which are not intended to be captured by an image recording device, for instance inverse images of image frames of the sequence in order to hide the respective image content from direct viewers by creating a perceived homogeneous neutral image, as for instance described in international patent application WO 2018/138366 (Appario).

The image recording device used in step b), can be any device which is capable of capturing a scenery with a certain recording frame rate, such as a professional broadcast camera, a video camera, a DLSR camera operating in video mode, or a camera of a mobile device, such as a mobile phone camera. Generally, the recording frame rate corresponds to the video frame rate VFR of the final video stream generated from the sequence of recording image frames. However, the recording frame rate can be higher than the video frame rate which results in a slow-motion effect for the final video if all captured recording image frames are used for generating the final video. Likewise, the recording frame rate can be lower than the final video frame rate VFR, resulting in a time-lapse effect. Moreover, the recording frame rate has to be higher than the final video frame rate VFR if the sequence of display image frames comprises at least two different sets of image data and from the sequence of recording image frames, at least two videos are created each having, for instance, a predetermined video frame rate VFR. For instance, for two sets of image data, the recording frame rate is typically twice the video frame rate (RFR = 2 x VFR).

Generally, the displaying frame rage DFR and the recording frame rate RFR of the camera will differ initially. Moreover, there will be a phase shift between the respective display image frames and recording image frames, i.e. there will be a generally variable time delay between the leading edge of a display image frame and the leading edge of a recording image frame. Therefore, according to step c) of the method of the present invention, it is necessary to synchronize the display frame rate DFR and the recording frame rate RFR such that the recording frame rate is an integer multiple or an integer fraction of the display frame rate.

Finally, it has to be ensured that a recording image frame only captures images which include a single display image frame, i.e. a recording image frame should not overlap with subsequent display image frames. As there is initially no link between the displaying of the sequence of display image frames and the recording of the sequence of recording image frames, such an overlap can generally not be avoided. Therefore, according to step d), a phase shift between the sequence of display image frames and the sequence of recording image frames is adjusted such that each recording image frame captures a portion of a single displaying image frame. In the context of the present invention, the term "portion" comprises any temporal fraction of a single displaying image frame up to and including 100 percent of the time period of a single displaying image frame.

One embodiment of the present invention can be employed if the image displaying devices can be controlled/-modified. In this case, the recording frame rate RFR of the image recording device is considered fixed and acting as a master and the synchronizing step c) is essentially implemented by determining the recording frame rate RFR of the image recording device and adapting the image displaying frame rate DFR of the image displaying device accordingly to the recording frame rate RFR, for instance by changing a frequency of a displaying clock of the image displaying device. For instance, the recording frame rate can be read manually on the image recording device and the image displaying device can be configured manually as well. More preferably, however, the image recording device can read-out its recording frame rate and transmit the recording frame rate RFR via a wireless network to the image displaying device and the image displaying device can change its displaying clock accordingly. In this case, the phase shift adjusting step d) comprises phase shifting the sequence of display image frames. Accordingly, for implementation of this variant, it is also necessary to control the image displaying device. Moreover, determining, whether an appropriate phase shift has been established, requires also feedback from the image recording device which can be accomplished in various manners described below in connection to an embodiment, where the method of the present invention is implemented in the image recording device.

Generally, both the recording clock and the displaying clock will experience a certain drift over time so that the synchronizing and phase shift adjusting steps c) and d) will have to be repeated at certain intervals.

A drawback of the first embodiment of the present invention resides in the fact that adjusting the image displaying device to an image recording device is only feasible when there is only one image recording device or a set of already synchronized image recording devices. In a general setting, for instance if an audience of many mobile phone users employs their cameras to capture a scenery, these individual cameras will be both in recording frequency and in respective phases with respect to the sequence of display image frames. Conversely, a multitude of image displaying devices, for instance an array of LED panels creating a large LED screen, will generally provide no problem because the individual LED panels are interconnected and synchronized in order to display a meaningful video content.

Therefore, according to a preferred second embodiment of the present invention, the synchronizing step c) comprises the sub-steps of determining the displaying frame rate DFR of the image displaying device and adapting the recording frame rate RFR of the individual image recording devices to the displaying frame rate DFR by changing a frequency of the individual recording clocks of the individual image recording devices. This embodiment assumes the usual case that there is only one displaying frame rate DFR but multiple image recording devices each having their own recording frame rate and phase shift with respect to the sequence of display image frames.

In this embodiment, the displaying frame rate DFR can be determined by reading out a frequency of a display-clock of the image displaying device and wirelessly transmitting the display-clock frequency to the image recording device. However, wireless networks have a significant latency which limits the accuracy of the synchronizing step c) and the phase shift adjustment step d). For instance, using a variant of the Network Time Protocol (NTP), which includes an estimate for network latency, an accuracy of around 0.25 ms can be achieved.

The present invention teaches various solutions to achieve a better accuracy in the synchronizing step c).

In one embodiment of the invention, the displaying frame rate DFR is determined by analyzing the image content of the sequence of recording image frames. Steps c) and d) of the method of the present invention are therefore implemented in the image recording device and any negative influence of network latencies is avoided.

There are various methods for analyzing the image content of the sequence of recording image frames. For instance, it might be feasible to analyze the overall image for lighting or contrast changes on a pixel level thus identifying individual display image frames which then allows determining the respective displaying frame rate DFR. Preferably, however, the sequence of display image frames comprises a pre-determined identifier image frame, for instance a color coded image frame such a monochromatic image frame or a one- or two-dimensionally patterned image frame, such as a bar code or a QR code. When the camera software is adapted to identify the occurrence of such pre-determined identifier image frames, the corresponding analysis is more time-effective than analyzing generally unknown image content. Such a pre-determined identifier image frame can be much shorter than regular video content shown with the image displaying device because the identifier image frame will generally not constitute a meaningful video content for the final video.

If a one- or two-dimensional patterned image is used as the pre-determined identifier image, such a patterned image, for instance a bar code or a QR code, can also include additional information, for instance the display frame rate itself can be coded in the patterned image. Thus, in cases where the display clock frequency is stable, it is not necessary to determine the displaying frame rate from the interval between pre-determined identifier image frames but the displaying frame rate can also be read-out directly from the information comprised in the patterned image.

Generally, however, there will be an inherent variability between the displaying-clock of the image displaying devices and the recording-clocks of image recording devices. For instance, due to manufacturing tolerances, these internal clocks will exhibit slight discrepancies in their oscillation frequencies. Additionally, environmental factors such as temperature differences can cause variations in the clock frequencies over time. These differences result in clock drift, where the internal clock of the image displaying device, referred to as the "display-clock," and the internal clock of the image recording device, referred to as the "recording-clock," gradually lose synchronization.

For instance, even a minor frequency mismatch can lead to cumulative timing errors over prolonged operation, disrupting the alignment of displayed and recorded frames. This issue is exacerbated in scenarios requiring high precision, such as capturing hidden content displayed for a fraction of a frame time interval. Without a mechanism to dynamically correct for clock drift, stable synchronization cannot be maintained, compromising the quality and accuracy of recorded content.

In the context of the present invention, it is preferred that the accuracy of the clocks should be in the microsecond ($\mu$s) range, i.e. the time difference $\Delta t$ between the display-clocks and the recording-clocks should preferably not be greater than 1 to 10 $\mu$s. Under certain conditions, for instance when using long display image frame with black phases at the front and end parts of the display image frames, an accuracy of up to 100 $\mu$s may still be acceptable. Lower accuracy, e.g. in the range of 200 $\mu$s will require additional compensation measures. Such high accuracies in the microsecond range can be achieved if both the display-clocks and the recording clocks are synchronized with an external wireless master clock signal.

Therefore, according to a preferred embodiment of the present invention, the synchronizing step c) comprises the sub-step of adapting said displaying frame rate (DFR) and said recording frame rate (RFR) to a wireless master clock signal. Thus, the display-clocks and the recordings clocks can be synchronized to the same master clock signal. When a very stable master clock signal is provided, timing accuracies of 1 $\mu$s and better can be achieved. This embodiment addresses the above mentioned synchronization challenges by compensating for manufacturing tolerances and environmental variations, ensuring robust and reliable wireless synchronization between image displaying devices and image recording devices.

In one embodiment of the present invention, the synchronization between the display-clock of the image displaying device and the recording-clock of the image recording device is achieved via an external atomic clock system, i.e. the wireless master clock signal can be time signal of an external atomic clock system. This embodiment leverages the precision and reliability of atomic clocks to ensure highly accurate synchronization, overcoming the inherent limitations of the internal clocks.

The external atomic clock system provides a stable and universal reference time signal that can be utilized by both the image displaying and recording devices. The time signal may be accessed in one of two primary ways: via the internet or through a satellite navigation system such as GPS, GLONASS, Galileo, or BeiDou.

When utilizing the internet, the image displaying and recording devices are configured to connect to a network time protocol (NTP) server that is synchronized with the atomic clock system. Each device periodically queries the server to obtain the precise time, which is then used to align the display-clock and recording-clock. This approach ensures seamless synchronization in environments with reliable internet connectivity. Any latency within the image displaying devices and the image recording devices can be minimized if the same or similar software applications are used to synchronize the internal clocks to the time signal. In addition, it is possible to calibrate the respective internal signal processing pathways in order to compensate for any latencies.

Alternatively, for instance in scenarios where internet access may be unavailable or unreliable, the time signal can be provided by a satellite navigation system. Each device is equipped with a satellite receiver capable of decoding the precise timing information transmitted by the satellite system. The timing data, derived from the atomic clock onboard the satellites, is used to continuously adjust and synchronize the internal clocks of the devices. This method is particularly advantageous for outdoor applications, such as sports events or large-scale productions, where satellite signals are readily available.

To implement this embodiment, both the image displaying and recording devices are equipped with modules for receiving and processing the atomic clock signals, whether through internet-based NTP servers or satellite navigation systems. The modules ensure that the synchronization process is automatic, requiring minimal user intervention. This guarantees accurate frame alignment between the displaying and recording devices, enabling high-quality content capture and playback without artifacts caused by timing mismatches.

This embodiment not only ensures superior synchronization accuracy but also enhances the versatility and adaptability of the system, making it suitable for a wide range of applications and operating environments.

In a further embodiment of the present invention, the image displaying device is equipped with a satellite-based, for instance a GPS-based Sync Pulse Generator (SPG) that functions as a master clock, providing a synchronization signal to the mobile recording devices. The SPG utilizes highly accurate timing information obtained from GPS satellites to generate synchronization pulses. These pulses define the timing for each display frame and serve as a reference for the recording devices.

The synchronization signal generated by the SPG can be transmitted to the mobile recording devices using various wireless communication methods, such as Wi-Fi, Bluetooth, or RF transmissions on a dedicated frequency band. For example, the SPG can embed timing data within a low-latency broadcast signal, which is periodically transmitted to all recording devices within range. Alternatively, the SPG may use a coded light synchronization method, where imperceptible modulations in the intensity or color of the displayed content encode the timing data. This coded light is detected by the image sensors of the mobile recording devices and used to synchronize their internal recording clocks.

To ensure robust synchronization in environments with potential interference, the SPG may also implement error-checking mechanisms, such as CRC (Cyclic Redundancy Check), within the transmitted signals. Additionally, the SPG can support real-time adjustments to compensate for drift or latency in the recording devices, providing dynamic resynchronization capabilities. This embodiment ensures that the image displaying device acts as a reliable master clock, enabling mobile recording devices to achieve precise frame alignment with minimal dependence on external infrastructure.

When the method of the present invention is implemented in the image recording device, the phase shift adjusting step d) comprises phase shifting the sequence of recording image frames. Such a phase shift can be accomplished by various techniques, for instance by reset sampling where the camera is restarted until its phase with respect to the sequence of displaying image frames falls within a pre-determined tolerance. Another possibility which allows shifting the sequence of recording image frames is frame injection.

Certain camera APIs, such as Android's Camera2 API, allow a high priority capture request to be injected into a normal priority continuous sequence of recording image frames. Typically, the continuous stream is used for the view finder, while the high priority request is used to capture a still image. By injecting a frame with exposure longer or shorter than the individual recording frame time interval 1/RFR, the phase of a screen can be shifted in one iteration. The above-described variants (reset sampling and frame injection) can be implemented in most commercially available cameras. However, if there is even the possibility to access and modify the camera firmware, a phase shift option can be implemented directly in the camera firmware.

Typically, the trailing or leading edges of the recording image frames and the displaying image frames are aligned during the phase shift adjusting step d). Preferably, as the frame read-out is accomplished at the trailing edge, it is preferred that the phase shift adjusting step comprises aligning trailing edges of the recording image frames to trailing edges of the displaying image frames. This ensures that the available shutter angle of the image recording device can be maximized to include the whole available displaying image frame, if desired.

The accuracy of the phase shift adjusting step d) is essentially determined by the precision with which the location of the leading and/or trailing edges of the displaying image frames can be determined by the image recording device. This accuracy is usually determined by the recording frame rate RFR. The higher the recording frame rate, the lower will generally be the resulting image quality of the video because the maximum exposure time for each individual recording image frame is 1/RFR. However, according to one embodiment of the present invention, it is suggested to increase temporarily the recording frame rate RFR to a high recording frame rate HFR in step b) in order to identify the location of the pre-determined identifier image frame with greater precision. The term "temporarily increasing" means in the context of the present invention that the recording frame rate is only increased for such a period of time that the occurrence of an identifier image frame is ensured. For instance, if one identifier image frame is included in each time period 1/DFR, it will be sufficient to increase the recording frame rate for one, two or three times the displaying time interval 1/DFR in order to provide for a high accuracy phase shift adjustment. This short time interval will generally reduce the image quality of the resulting video for a correspondingly short period of time but this will generally not negatively affect the user experience.

It will usually also be necessary to adjust a shutter speed of the image recording device in step b) during the phase shift adjusting step d) in order to identify the precise location of the pre-determined identifier image frame with even more precision.

In certain embodiments, the phase shift adjusting step d) can comprises phase shifting the sequence of display image frames and phase shifting the sequence of recording image frames.

In embodiments, where a precise external master clock signal is available, for instance a time signal from an atomic clock, both the sequence of display image frames and said sequence of recording image frames can be adjusted to the wireless master clock signal. Accordingly, in a further embodiment of the present invention, said phase shift adjusting step d) comprises adjusting said sequence of display image frames and said sequence of recording image frames to said wireless master clock signal. Synchronization between the image displaying devices and the image recording device can achieved by aligning the start of their respective image sequences to a certain pre-determined times provided by the external master clock signal, for instance to full-second intervals. In one embodiment, the image displaying device aligns its sequence of display image frames at precisely defined full-second marks. In order to adjust for processing latencies, the display image frames can include a detectable synchronization signal that is detected by the image recording devices' cameras. This synchronization signal acts as a reference point for both devices to achieve phase alignment, ensuring accurate timing for subsequent image recording and display operations.

Following the initial synchronization signal, the image displaying device divides the time interval into distinct image slots, which can either be predefined or dynamically determined. The dynamic configuration can be facilitated using a QR code embedded within the synchronization signal or transmitted periodically as part of the data stream. The QR code can serve as a versatile data carrier, providing information about the sequence configuration or a reference link to an internet address where additional data can be downloaded. For example, the QR code might contain metadata specifying the frame timing, sequence identifiers, or instructions for dynamic adjustments.

More generally, to support robust synchronization, two distinct types of signals can be transmitted: higher frequency synchronization pulses (sync pulses) and lower-frequency data pulses carrying, e.g., the QR code. The sync impulse ensures continuous and precise alignment of the image displaying device and recording device clocks, while the data impulse provides additional configuration details. This dual-signal approach ensures that synchronization is maintained even in scenarios with intermittent or variable data transmission rates.

The QR code embedded in the synchronization system can also be designed for redundancy to handle potential signal degradation or noise in the operating environment. Additionally, the QR code may include error-correcting codes or checksum information to ensure reliable data decoding by the image recording devices. In cases where the QR code serves as a reference to an online resource, the recording device can seamlessly connect to the specified internet address to retrieve the required sequence data, enabling dynamic updates and configuration flexibility.

This embodiment further enhances the robustness and adaptability of the synchronization method, offering a scalable solution for various use cases, including environments with multiple image recording devices or complex image displaying configurations. By combining precise phase alignment with dynamic data provisioning, the invention ensures superior synchronization accuracy and operational efficiency.

While the synchronizing step c) and the phase shift adjusting step d) of the method of the present invention will establish a precise synchronization of the image displaying device and the image recording device for a certain period of time, it will usually be necessary to repeat steps c) and d) at regular intervals while continuously performing displaying step a) and recording step b) in order to compensate for drift of the recording-clock or the displaying-clock. Depending on the required accuracy, steps c) and d) will typically be repeated once every ten seconds or once every minute or even once every five minutes.

The present invention also concerns an image displaying device and/or an image recording device implementing the method of the present invention.

The present invention will now be described in more detail with reference to preferred embodiments schematically depicted in the attached drawings. In the drawings:

Fig. 1    shows a typical broadcast scheme of a tennis event using a video camera;
Fig. 2    shows a video image frame of a video stream obtained with the video camera of Fig. 2; and
Fig. 3    shows a time line of a typical image capturing scheme according to the present invention.

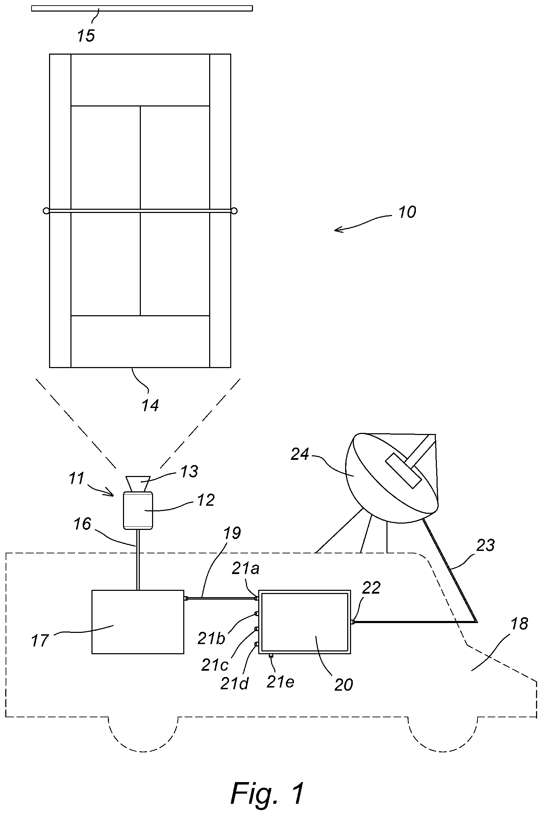

Figure 1 shows a typical broadcast scheme of a tennis event. Generally, several cameras are distributed around a tennis court 10. For the sake of simplicity, in the present example only one camera 11 having a camera head 12 and a camera lens 13 mounted to the camera head is shown. Camera 11 is placed behind and above a baseline 14 of tennis court 10. Usually, sports events which are broadcast include various kinds of advertisement and marketing elements. In the present case, an LED signboards 15 is arranged behind baseline 14 of tennis court 10. Camera 11 is operating at a standard video frame rate SVFR, for instance at a standard video frame rate of 12, 24, 25, 30, 50 or 60 fps (frames per second). Especially at events where fast moving objects such as tennis balls are part of a scenery, the camera is usually operated at a shutter time/exposure time which essentially corresponds to the associated standard video frame rate time interval · T = 1/SVFR, i.e. in the example of SVFR = 50 fps at a standard video frame rate time interval of 20 ms. Any fast moving object such as a tennis ball consequently appears as an extended element blurred along its trajectory over the exposure time of 20 ms. This allows broadcast viewers to more easily perceive the movement of the ball because "jumps" of the ball between consecutive video image frames are avoided. The final result is a blurred line following the path of the tennis ball.

In the example of Figure 1, a data transmission line 16 connects camera 11 with a camera control unit (CCU) 17 installed in an OB van 18. A raw video output line 19 connects the camera control unit 17 with a vision mixer 20 which has multiple inputs 21a - 21e for video data so that graphic, text or video inserts or overlays can be added to the raw video captured by camera 11. The final video stream generated by the vision mixer (and optional other video processing equipment not shown in Fig.1) is then provided at a video output 22 of the vision mixer as an output video stream which can, for instance, be broadcast at the standard video frame rate via an output transmission line 23 and a satellite dish 24 installed on top of the OB van 18 to the broadcast viewers. As a matter of course, wire-based transmission using, e.g. a fiber line, or transmission via a broad band cellular network, e.g. a 5G network, are also possible.

In the present embodiment, an OB van is only a typical example for an existing broadcasting technology. However, remote broadcast technology can be employed as well where rather than transmitting final video feeds from an OB van to a rebroadcast center, raw camera video feeds are transmitted to a remote location where they are processed/assembled into the final video signal.

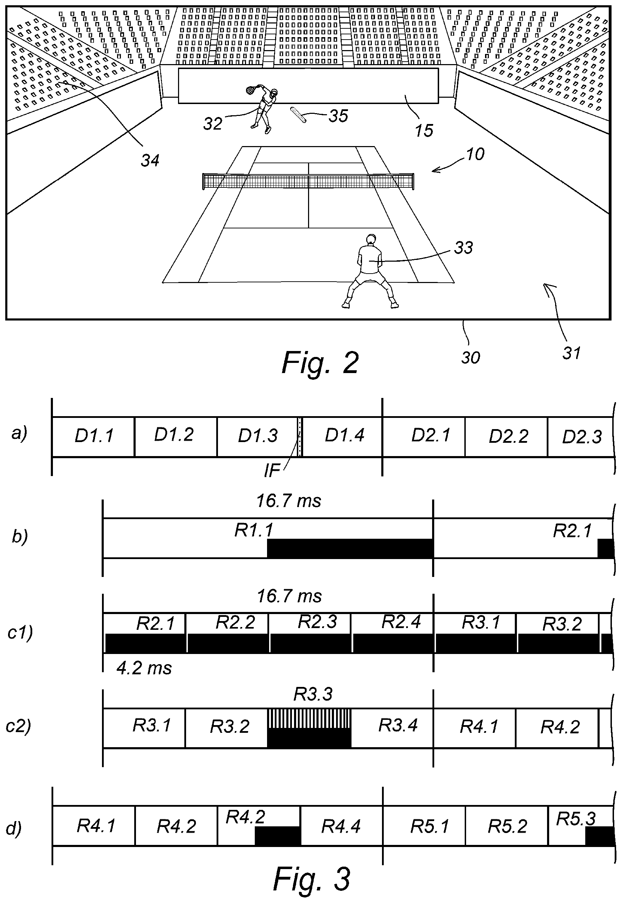

Fig. 2 shows a typical video image frame obtained by projecting an image caught be the camera lens 13 of camera 11 onto the image sensor of camera 11. The video image frame has an outer image border 30 and an inner image region 31 corresponding to the camera image captured during a standard video frame rate time interval · T. In the present example, camera 11 of Fig. 1 captures a scenery which comprises the tennis court 10. In the present example, one tennis player 32 is in the process of serving while the second player 33 is expecting the serve. LED signboard 15 shows advertisements intended to be seen by the direct viewers (spectators) 34 and is therefore part of the scenery shown in the image frame of Fig. 2. Conventionally, the same advertisement is shown to all broadcast viewers. As explained in connection with Fig. 4, the shutter angle of camera 11 is usually large, e.g. between 270 and 360° (the latter orresponding to the standard frame rate time interval of e.g. 20 ms (50 fps) that the fast moving tennis ball 35 is no longer a sharp object but motion-blurred along a part of its trajectory. This effect is intended in conventional recording of tennis matches to increase visibility of the tennis ball for the broadcast viewers because it avoids "jumps" of the tennis ball 35 from one video image frame to the next.

When broadcasting international sports events, it became common to employ multi-content advertisement. Multi-content advertisement in the sense of the present invention means that on one and the same advertisement signboard which is part of a scenery captured by the camera, different types of image content are shown for different sub-sets of viewers, for instance the direct viewers present at the event and one or more different sets of broadcast viewers. Therefore, the dedicated image content (e.g. different advertisements) can be presented simultaneously throughout the event to the direct viewers and different sets of broadcast viewers, for instance to broadcast viewers in different countries where each can see an advertisement in their native language. To effect multi-content advertisement, different technologies have been developed in the past. For instance, technologies denoted "virtual advertisement" use image processing technology to identify the location of the physical advertisement signboards in a scenery of the video stream and selectively replace the area of the detected signboards by alternative image content for different sub-sets of broadcast viewers resulting in different final videos being produced of the event where each shows the same scenery but the advertisement boards show different advertisements. This technique still faces problems with properly identifying background and foreground (for instance, players moving before the signboards), etc. In another technology denoted "dynamic content multiplication" described in international patent application WO 2018/138366 A1, every type of advertisement of the multi-content advertisement is actually shown on the physical display but only one type long enough so that it can be perceived by the direct viewers present at the event (the so-called venue feed). Additional alternative advertisements are shown in a time-sliced multiplexed manner on the physical display for only brief periods of time too short to be noticed by the direct viewers. Additionally, in order to avoid the direct viewers experiencing flickering of the physical LED signboards during the event, international patent application WO 2018/138366 A1 suggests to present the additional image content (the so-called "parallel feeds") not only as a sequence of the respective images but as a sequence of images and corresponding inverse images so that the resulting inserted image is a grey image which reduces the disturbance of the direct viewers. A camera is employed which captures images synchronized to the particular image content feeds shown on the LED signboards but do not capture the inverse images shown on the LED signboards. Thus alternative image content in the sense of the present invention can be actual advertisements shown on the physical displays which are captured by synchronized cameras or image content which is only intended to identify the location of the signboards in the captured camera images for replacing the image content of the signboards by alternative image content in video post-production. The alternative image contents shown on the physical displays can in this case be for instance monochromatic chromakey images or pattern images. Such pattern images can also include tracking patterns which allow to establish the exact viewing angle/orientation between camera and therefore facilitate exact discrimination between background and foreground.

Such additional image content is usually presented for such short time intervals that it is not consciously seen by the direct views. Moreover, it is also not seen by broadcast viewers because it is only serves as an information source for video post-processing and will ultimately be replaced by different image content in the final video stream sent to broadcast viewers.

Figure 3 shows an implementation of the method of the present invention according to an embodiment where the displaying frame rate DFR is pre-set and the method of the present invention is implemented in the recording device so that the recording frame rate and the phase shift of the sequence of the recording image frames is adapted to the sequence of the display frames.

We assume that the LED signboards at the tennis event of Figure 2 show a sequence of display image frame in such a manner that additional video content not intended for the direct viewers present at the event is shown. Figure 3a) shows a sequence of display image frames where we assume that a camera capturing a video of the event is operating at a standard video frame rate VFR of 60 fps, corresponding to a standard video frame time interval of $1/60 \, s^{-1} = 16.7$ ms. The large vertical bars in Figure 3a) delimit these standard frame rate time intervals of 16.7 ms. The LED signboard operates at a displaying frame rate of 240 fps, i.e. each time interval of 16.7 ms, the LED signboards show in the present example four different sets of image data denoted D1.1, D1.2, D1.3, D1.4, D2.1, D2.2, ..., each having a duration of 4.2 ms. Accordingly, display image frames D1.1, D2.1, etc. correspond to the same set of image data. In the present example, it is assumed that image data D1.1 and D1.2 are actually the same image data intended to be viewed by the direct viewers thus ensuring that this image content is presented for 50 percent of the frame time interval. Image content D1.3, D2.3, etc. is intended to be captured by a camera only, for example containing dedicated video content for foreign visitors present at the sports event in their native language. Image content D1.4, D2.4, etc. can be an inverse image of image content D1.3, D2.3, etc., respectively, in order to result in the perception of a neutral grey image when the combination of D1.3 and D1.4, etc. is viewed by the direct viewers present at the event.

Figure 3b) shows the recording sequence of a camera operating in normal camera mode, i.e. capturing a recording image frame R1.1, R2.1 every 16.7 ms. The black rectangle in each recording image frame indicates the shutter angle ending at the trailing edge of each frame, i.e. visualizing the actual exposure time which usually depends on the lighting conditions at the event. In the present case, we assume a shutter angle of 180°, i.e. half of each frame time interval of 16.7 ms is used for the exposure of the frame. As can be taken from Figure 3b), the first recording frame R1.1 will capture half of the display image frame 1.3, part of its inverse display image frame 1.4 and part of the subsequent image frame 2.1 resulting in a superposition of the respective image content in the captured video image frame.

In the present example, it is also assumed that the image content D1.3 and the image content D1.4 are not shown for their whole period of 4.2 ms but one half of a short identifier frame IF is shown at the end of frame D1.3 and the start of frame D1.4, respectively. Accordingly, in the image frame captured in Figure 3b), the identifier frame, e.g. a QR code, is also overlayed over the resulting recoded image R1.1.

Through image processing, the mobile phone of the user can therefore retrieve from analyzing the QR code information of the captured image R1.1 that the LED panel operates at a display frame rate DFR of 240 fps.

In Figure 3c1), the corresponding recording frame rate of the mobile phone camera is adjusted accordingly and operated at full or almost full shutter angle in order to determine in which recoding frame the identifier frame IF is recoded (in this example in frame R2.3). In Figure 3c1) the standard video frame time interval corresponding to recording image frames 2.1 has been shown below the first standard video frame time interval of Figure 3a1) just to denote the relative phase shift between displaying image frames and recording image frames. In practice, the adaptation of the recording frame takes place in relation to the subsequent displaying image frame D2.1-D2.4.

As can be seen, there is still a phase shift δ between the display image frames and the recording image frames and in step c2), the recording frame rate is adjusted to a high recording frame rate HRFR at least during the period corresponding to third frame in the sequence corresponding to third displaying image frame Dx.3 (here shown beneath D1.1-D1.4) but in practice in the third frame of the subsequent standard video frame time interval D3.1-D3.4, i.e. in order to identify the location of the identifier image frame IF more precisely and adjusting the phase of the recording image frames accordingly.

Thus, in the present example, frame rate synchronization and phase shift adjustment have been accomplished within three standard video frame time intervals, i.e. within 50 ms. Subsequently synchronized video recording commences as shown in Figure 3d).

Figure 3d) shows the resulting adjusted sequence of recording image frames. The identifier can also comprise the information that the third set of image data contains foreign language information so that the camera software discards recording frames R.4.1, R.4.2 and R4.4 and generates a video at a standard video frame rate VFR of 60 fps using only image data recorded in recording frames R4.3, R5.3, etc.

## Claims

1. A method for wirelessly synchronizing at least one image displaying device and at least one image recording device, comprising the steps of:

   a) displaying a sequence of display image frames at a displaying frame rate (DFR) with said image displaying device;

b) recording a sequence of recording image frames of scenery including said sequence of display image frames with said image recording device at a recording frame rate (RFR);

c) synchronizing said displaying frame rate (DFR) and said recording frame rate (RFR) such that said recording frame rate (RFR) is an integer multiple or an integer fraction of said displaying frame rate; and

d) adjusting a phase shift between said sequence of displaying image frames and said sequence of recording image frames such that each recording image frame captures a portion of a single displaying image frame.

2. The method according to claim 1, wherein said synchronizing step c) comprises the sub-steps of

determining said recording frame rate (RFR) and
adapting said displaying frame rate (DFR) to said recording frame rate (RFR) by changing a frequency of a displaying-clock of said image displaying device,

wherein, preferably, said recording frame rate (RFR) is determined by reading-out a frequency of a recording-clock of said image recording device and wirelessly transmitting said recording-clock frequency to said image displaying device.

3. The method according to claim 1, wherein said synchronizing step c) comprises the sub-steps of

determining said displaying frame rate (DFR) and
adapting said recording frame rate (RFR) to said displaying frame rate (DFR) by changing a frequency of a recording-clock of said image recording device,

wherein, preferably, said displaying frame rate (DFR) is determined by reading-out a frequency of a display-clock of said image displaying device and wirelessly transmitting said display-clock frequency to said image recording device.

4. The method according to claim 3, wherein said displaying frame rate (DFR) is determined by analyzing the image content said sequence of recording image frames.

5. The method of claim 4, wherein said sequence of display image frames comprise a pre-determined identifier image frame, for instance a color-code image.

6. The method according to claim 5, wherein said pre-determined identifier image frame comprise a one- or two-dimensional patterned image, such as a bar-code or a QR-code.

7. The method according to claim 1, wherein said synchronizing step c) comprises the sub-step of
adapting said displaying frame rate (DFR) and said recording frame rate (RFR) to a wireless master clock signal.

8. The method of claim 7, wherein the wireless master clock signal is a time signal of an external atomic clock system.

9. The method of claim 8, wherein the time signal is provided via Wi-Fi, Buetooth, internet or via a satellite navigation system.

10. The method according to any one of claims 1 or 2, wherein said phase shift adjusting step d) comprises phase shifting said sequence of display image frames.

11. The method according to any one of claims 1 to 10, wherein said phase shift adjusting step d) comprises phase shifting said sequence of recording image frames.

12. The method according to any one of claims 10 or 11, wherein said phase shift adjusting step d) comprises aligning trailing edges of said recording image frames to trailing edges of said displaying image frames.

13. The method according to any one of claims 10 or 11, wherein said phase shift adjusting step d) comprises temporarily increasing said recording frame rate (RFR) to a high recording frame rate (HRFR) in said recording step b).

14. The method according to any one of claims 1 to 11, wherein recording step b) comprises adjusting a shutter speed of said image recording device.

15. The method according to any one of claims 7 to 9, wherein said phase shift adjusting step d) comprises adjusting said sequence of display image frames and said sequence of recording image frames to said wireless master clock signal.

16. The method according to any one of claims 1 to 15, wherein said image displaying device is selected from a group comprising LED panels and LED projectors and said image recording device is selected from a group comprising digital cameras such as video cameras or mobile phone cameras.

Fig. 1

*Fig. 2*

*Fig. 3*

Europäisches
Patentamt

European
Patent Office

Office européen
des brevets

# EUROPEAN SEARCH REPORT

**Application Number**

EP 24 22 3730

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/113256 A1 (POPP HERMANN [DE]) 13 April 2023 (2023-04-13) <br> * paragraph [0010] - paragraph [0011] * <br> * paragraph [0013] * <br> * paragraph [0029] - paragraph [0037] * <br> * paragraph [0042] - paragraph [0044] * <br> * paragraph [0074] - paragraph [0078] * <br> * paragraph [0119] - paragraph [0122]; figures 4A, 4B * <br> * paragraph [0124] * | 1-16 | INV. <br> H04N5/04 |
| A | US 2024/404456 A1 (OKAMOTO EIZO [JP] ET AL) 5 December 2024 (2024-12-05) <br> * paragraph [0075] * <br> * paragraph [0134] - paragraph [0139]; figure 12 * <br> * paragraph [0142] - paragraph [0145]; figure 14 * | 1-16 | |
| A | CN 116 980 753 A (SHENZHEN AOTO ELECTRONICS CO) 31 October 2023 (2023-10-31) <br> * the whole document * | 1-16 | TECHNICAL FIELDS SEARCHED (IPC) <br><br> G09G <br> H04N |
| A | US 2024/305738 A1 (VON BRAUN MAX [DE]) 12 September 2024 (2024-09-12) <br> * paragraph [0027] - paragraph [0029] * <br> * paragraph [0062] - paragraph [0073]; figures 3-6 * | 1-16 | |

-/--

The present search report has been drawn up for all claims

| Place of search | Date of completion of the search | Examiner |
|---|---|---|
| Munich | 13 May 2025 | Beaudoin, Olivier |

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 22 3730

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/297717 A1 (BRAUN MAX VON [DE]) 23 September 2021 (2021-09-23) * paragraph [0007] - paragraph [0009] * * paragraph [0046] - paragraph [0049] * * paragraph [0077] - paragraph [0082]; figure 1 * * paragraph [0083] - paragraph [0086]; figures 2,3 * * paragraph [0104] - paragraph [0105]; figure 9 * ----- | 1-16 | |

**TECHNICAL FIELDS SEARCHED (IPC)**

The present search report has been drawn up for all claims

| Place of search | Date of completion of the search | Examiner |
|---|---|---|
| Munich | 13 May 2025 | Beaudoin, Olivier |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C01)

# EP 4 770 074 A1

## ANNEX TO THE EUROPEAN SEARCH REPORT
## ON EUROPEAN PATENT APPLICATION NO.

EP 24 22 3730

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2025

| Patent document cited in search report | | | Publication date | Patent family member(s) | | | Publication date |
|---|---|---|---|---|---|---|---|
| US 2023113256 | A1 | | 13-04-2023 | CN | 115967782 | A | 14-04-2023 |
| | | | | DE | 102021126309 | B3 | 01-12-2022 |
| | | | | EP | 4164236 | A1 | 12-04-2023 |
| | | | | EP | 4284010 | A2 | 29-11-2023 |
| | | | | US | 2023113256 | A1 | 13-04-2023 |
| US 2024404456 | A1 | | 05-12-2024 | CA | 3230091 | A1 | 13-04-2023 |
| | | | | CN | 118043877 | A | 14-05-2024 |
| | | | | EP | 4414974 | A1 | 14-08-2024 |
| | | | | JP | 7608034 | B2 | 06-01-2025 |
| | | | | JP | WO2023058465 | A1 | 13-04-2023 |
| | | | | KR | 20240073868 | A | 27-05-2024 |
| | | | | TW | 202319825 | A | 16-05-2023 |
| | | | | US | 2024404456 | A1 | 05-12-2024 |
| | | | | WO | 2023058465 | A1 | 13-04-2023 |
| CN 116980753 | A | | 31-10-2023 | NONE | | | |
| US 2024305738 | A1 | | 12-09-2024 | EP | 4252409 | A2 | 04-10-2023 |
| | | | | US | 2024305738 | A1 | 12-09-2024 |
| | | | | WO | 2022112579 | A2 | 02-06-2022 |
| US 2021297717 | A1 | | 23-09-2021 | AU | 2019309167 | A1 | 14-01-2021 |
| | | | | CA | 3105408 | A1 | 30-01-2020 |
| | | | | CN | 112470485 | A | 09-03-2021 |
| | | | | EP | 3831076 | A1 | 09-06-2021 |
| | | | | JP | 7391936 | B2 | 05-12-2023 |
| | | | | JP | 2021532638 | A | 25-11-2021 |
| | | | | US | 2021297717 | A1 | 23-09-2021 |
| | | | | WO | 2020021068 | A1 | 30-01-2020 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009102957 A1, Phelan
- WO 2018138366 A, Appario

- WO 2018138366 A1